# EUROPÄISCHE PATENTSCHRIFT

(11) **EP 2 466 466 B1**
(45) Veröffentlichungstag und Bekanntmachung des Hinweises auf die Patenterteilung: **16.10.2013**
(21) Anmeldenummer: 10194309.0
(22) Anmeldetag: 09.12.2010
(51) Int. Cl.: G06F 11/16, G06F 11/14

(54) **Verfahren zur Fehlererkennung bei der Ausführung eines Echtzeit-Betriebssystems**
Method for detecting errors when executing a real-time operating system
Procédé de détection d'erreurs lors de l'équipement d'un système de fonctionnement en temps réel

(43) Veröffentlichungstag der Anmeldung: 20.06.2012
(73) Patentinhaber: Siemens Aktiengesellschaft, 80333 München (DE)
(72) Erfinder: Niesser, Otto, 90584, Allersberg (DE)

(56) Entgegenhaltungen:
- US-A1- 2003 126 498
- US-A1- 2010 058 335
- US-B1- 6 625 751

## Beschreibung

Die Erfindung betrifft ein Verfahren zur Fehlererkennung bei der Ausführung eines Echtzeit-Betriebssystems, ein Computerprogrammprodukt, sowie eine Vorrichtung zur Fehlererkennung bei der Ausführung eines Echtzeit-Betriebssystems.

Viele moderne Prozessoren bieten heutzutage mehrere Prozessorkerne und Virtualisierungstechnologien. Dabei kommen sogenannte Hypervisor zum Einsatz. Hierbei handelt es sich um eine Software, die durch Verwendung von Virtualisierungstechnologien ein oder mehrere Gast-Betriebssysteme auf der realen Hardware zum Ablauf bringt, und dabei die verfügbaren Ressourcen verwaltet. Die Ressourcen können hierbei sowohl den Gästen zugeteilt werden, als auch unter Hypervisorkontrolle verbleiben. Im Gegensatz zu den früher verfügbaren Technologien geschieht dies mit geringem Performancenachteil und ohne in das Gast-Betriebssystem eingreifen zu müssen.

Das vorrangige Ziel ist es, die vorhandene hohe Prozessorleistung optimal auszunutzen, indem den einzelnen Prozessor-kernen unterschiedliche Aufgaben zugeteilt werden. So kann z.B. auf einem Kern ein echtzeitfähiges Betriebssystem mit den Steuerungsaufgaben betraut werden, während auf dem anderen Kern ein Standard-Betriebssystem wie Windows für die Visualisierung des laufenden Prozesses verwendet wird.

Ein Problem bei der Ausführung von Echtzeit-Betriebssystemen ist, dass diese gegen eine fehlerhafte Ausführung abgesichert werden müssen. Programmierfehler, als auch hardwareseitige Fehler können insbesondere in Automatisierungssystemen dazu führen, dass die Automatisierungssysteme entweder eine fehlerhafte Produkterzeugung oder Produktbearbeitung bewirken, oder aber dass ein Totalausfall der Automatisierungssysteme stattfindet. In allen Fällen entsteht ein großer wirtschaftlicher Schaden, welcher durch geeignete Fehlererkennungsmechanismen bei der Ausführung eines Echtzeit-Betriebssystems verhindert werden könnte.

Die US 2010/058335 A1 beschreibt ein Verfahren und ein System für integriertes Datenmanagement und Speichermanagement in einem Speichersystem mit einer Steuerungseinheit mit einem Multikernprozessor und einer gemeinsamen Virtualisierungsumgebung.

Die US 2003/126498 A1 beschreibt ein Verfahren und eine Vorrichtung für eine funktionelle Redundanz-Überprüfung.

Dem gegenüber liegt der Erfindung die Aufgabe zugrunde, ein Verfahren, ein Computerprogrammprodukt und eine Vorrichtung zu schaffen, welches zur Fehlererkennung bei der Ausführung eines Echtzeit-Betriebssystems dient.

Die der Erfindung zugrunde liegende Aufgabe wird durch die Merkmale der unabhängigen Patentansprüche gelöst. Bevorzugte Ausführungsformen der Erfindung sind in den abhängigen Patentansprüchen angegeben.

Es wird ein Verfahren zur Fehlererkennung bei der Ausführung eines Echtzeit-Betriebssystems geschaffen, wobei logisch identische Instanzen des Echtzeit-Betriebssystems auf zumindest zwei Prozessor-Kernen eines ersten Prozessors in einer gemeinsamen Virtualisierungsumgebung parallel ausgeführt werden, wobei ein Hypervisor die parallele Ausführung der Instanzen überwacht, wobei bei Durchführung eines durch die Instanzen ausgelösten Hardwarezugriffs die beim Hardwarezugriff für jede Instanz übertragenen Daten durch den Hypervisor miteinander verglichen werden, wobei im Falle einer Abweichung der übertragenen Daten oder im Falle eines einseitigen durch eine der Instanzen ausgelösten Hardwarezugriffs ein Fehler als durch den Hypervisor erkannt gilt.

Die Erfindung schlägt daher ein Konzept der Systemabsicherung vor, bei dem der Hypervisor zur Parallelbearbeitung diversitärer Versionen eines Echtzeit-Betriebssystems (im Folgenden auch Firmware genannt) für Steuerungsaufgaben verwendet wird. Ziel ist es, Abweichungen in der Abarbeitung auf beiden Kernen zu erkennen, und z.B. eine Steuerung in einem zugeordneten Automatisierungssystem zu stoppen, bevor beim Anwender Schaden durch die Datenverfälschung entstehen kann.

Nach außen hin ändern sich die Systemeigenschaften einer Steuerung mit den hier vorgestellten Maßnahmen zur Systemabsicherung für den Anwender nicht. Der Einfluss auf Performance, insbesondere Verarbeitungsgeschwindigkeit und Latenzzeiten muss jeweils produktspezifisch betrachtet werden.

Bei verschiedenen Aktionen der Firmware wird die Interaktion des Hypervisors notwendig sein (z.B. Zugriff auf virtuelle oder reale Hardware). In diesem Fall wird die Abarbeitung der virtuellen Maschine unterbrochen, und dem Hypervisor die Unterbrechungsursache mitgeteilt. Es ist für eine virtualisierte Software auch möglich, durch Abarbeitung spezieller Opcodes (Hypercall) die virtuelle Maschine zu unterbrechen, um den Hypervisor zur Zuarbeit zu veranlassen.

Beide Arten von Unterbrechungen können zum Abgleich der Arbeits- bzw. Zwischenergebnisse der virtualisierten Firmware-Instanzen verwendet werden.

Die beschriebene Art des Abgleichs bei Unterbrechung wird im Folgenden als ,Synchronisationspunkt' bezeichnet.

Damit wird eine Kontrollinstanz geschaffen, die Fehler im internen Ablauf der Steuerung erkennt, und entsprechend reagieren kann. Dem Problem eines falschen Ablaufs durch unerkannte Speicherfehler kann somit, wie weiter unten diskutiert, abgeholfen werden, was mit den bisherigen Lösungen nicht in allen Fällen möglich war.

Der minimal notwendige Abgleich umfasst die Prüfung von Daten, die an die Hardware geschrieben werden und die Verteilung von Daten, die von der Hardware gelesen werden. Sollten unterschiedliche Daten geschrieben, verschiedene Synchronisationspunkte angelaufen oder nur ein Synchronisationspunkt einseitig angelaufen werden, so ist von einem Fehlverhalten der Firmware auszugehen.

Nach einer Ausführungsform der Erfindung handelt es sich bei dem durch eine der Instanzen ausgelösten Hardwarezugriff um einen direkten Hardwarezugriff oder um einen Hardwarezugriff über einen Hypercall unter Verwendung von Paravirtualisierung.

Grundsätzlich interagiert die Firmware mit der Hardware über z.B. Ein- und Ausgabebereiche (I/0 port), Speicherabbild (memory mapped device), Unterbrechungsanforderungen (interrupt) und Speicherdirektzugriff (direct memory access - DMA). Alle diese Interaktionen können und müssen durch den Hypervisor abgeglichen und synchronisiert werden.

Der Hardwarezugriff kann dabei grundsätzlich mittels zweier Verfahren realisiert werden. Einerseits ist es möglich, die Hardwaretreiber in der virtualisierten Firmware zu belassen, und die resultierenden Hardwarezugriffe im Hypervisor abzufangen und abzugleichen (Hardware-Virtualisierung). Die andere Möglichkeit besteht darin, die untersten Schichten des Hardwaretreibers in den Hypervisor zu verlagern, und den Zugriff darauf via Hypercall zu realisieren (Paravirtualisierung).

Im Falle der Hardware-Virtualisierung kann der Hardwarezugriff auf I/0 ports und memory mapped devices durch den Hypervisor abgefangen und behandelt werden. Bei der Interaktion mit der Hardware via Interrupt ist zu beachten, dass beide virtualisierten Firmwareinstanzen keinesfalls an unterschiedlichen Stellen unterbrochen werden dürfen. Dies kann dadurch erreicht werden, dass alle Interrupts durch den Hypervisor abgefangen, und an Synchronisationspunkten zur virtualisierten Firmware injiziert werden. Eine andere Möglichkeit besteht darin, die Firmware mit gesperrten Interrupts laufen zu lassen, und die bisherigen Interruptquellen regelmäßig auf anstehende Ereignisse abzufragen (polling).

Zur Behandlung von DMA-fähiger Hardware bestehen zusätzliche Anforderungen an Firmware bzw. Hypervisor. Der DMA-Zugriff erfolgt nur an eine physikalische Adresse, so dass der Hypervisor zum Vergleich bzw. Abgleich der Speicherinhalte das Vorliegen eines DMA-Transfers erkennen und behandeln muss. Diese Anforderung lässt sich aufwandsarm nur durch Einfügen von Synchronisationspunkten im DMA-fähigen Treiber der virtualisierten Firmware erfüllen, welche das Vorliegen von DMA-Aufträgen für den Hypervisor einfach erkennbar machen.

Bei einer paravirtualisierten Lösung wird, wie oben beschrieben, der Treiber mitsamt der Interrupt- und DMA-Verarbeitung in den Hypervisor verlagert. Der Treiberaufruf erfolgt durch Hypercall. Nach erfolgter Bearbeitung wird das Ergebnis den virtualisierten Firmware-Instanzen durch Injektion eines Interrupts oder durch Setzen einer Speicherzelle mitgeteilt.

Bei der Entscheidung, welches Treibermodell gewählt wird, ist der Entwicklungsaufwand gegen Performance abzuwägen. Soll letzteres priorisiert werden, so sind die Hardwaretreiber in den Hypervisor auszulagern.

Nach einer Ausführungsform der Erfindung umfasst der Hardwarezugriff einen Speicherzugriff, wobei bei der Durchführung eines durch die Instanzen ausgelösten Speicherzugriffs die Instanzen auf einen gemeinsamen Speicher zugreifen.

In einen nicht beanspruchten Beispiel erfolgt der Speicherzugriff unter Verwendung von identischen virtuellen Adressräumen für beide Instanzen, wobei den virtuellen Adressräumen unterschiedliche physikalische Adressräume für jede Instanz zugeordnet sind. Die Instanzen der Firmware können in diesem Fall jeweils über denselben virtuellen Adressraum verfügen, der verschiedenen physikalischen Adressräumen zugeordnet ist. Somit können absolut identische Versionen der Firmware zum Ablauf kommen.

In der Erfindung erfolgt der Speicherzugriff unter Verwendung von unterschiedlichen virtuellen Adressräumen für beide Instanzen. Die beiden Firmwareinstanzen müssen in diesem Fall unterschiedlich lokatiert werden. Zur Vereinfachung der Programmierung des Hypervisors können die unterschiedlichen virtuellen Adressräume mit den zugehörigen physikalischen Adressräumen identisch gehalten werden, was aber keine notwendige Voraussetzung für das beschriebene Verfahren ist. Sofern der Speicher der Steuerung von allen Kernen zugreifbar ist, kann der Hypervisor durch entsprechende Programmierung der Page-Tabellen für eine geeignete Speicheraufteilung und Zugriffsschutz sorgen. Dies ist zwar keine notwendige Voraussetzung für die Realisierung der Systemabsicherung, aber es werden Fehler durch Querzugriffe zwischen den Firmware-Instanzen untereinander und von den Firmware-Instanzen in den Hypervisor von vornherein vermieden. Der Hypervisor selbst hat stets Zugriff auf den Speicher seiner Gäste, d.h. der unter seiner Kontrolle ablaufenden Firmware-Instanzen.

Die beiden genannten Alternativen - identische oder unterschiedliche virtuelle Adressräumen - haben individuelle Vorteile:
So genügt es grundsätzlich zur Erkennung von korruptem Speicher durch Hardwarefehler, identische Firmwareinstanzen parallel ablaufen zu lassen. Die Abarbeitung erfolgt dann bzgl. Code und Daten auf identischen virtuellen Adressen, jedoch zwingend auf unterschiedlichen physikalischen Adressen. Für die Daten wird ohnehin jeweils ein eigener Speicherbereich pro Kern benötigt, für den Programmcode ist dies auch notwendig um neben korruptem Datenspeicher auch korrupten Programmspeicher erkennen zu können. Spätestens bei der Ausgabe korrupter Daten auf einer Hardwareschnittstelle oder Auseinanderlaufen an Synchronisationspunkten wird die Diskrepanz im Arbeitsergebnis bemerkt.

Somit eignet sich diese Variante der Speicherabsicherung zur Erkennung von Hardwarefehlern wie Speicherkippern oder fehlerhaften Zugriffen durch DMA-fähige Geräte. Bisher können nur Fehler im Speicher durch den Einsatz von ECC-RAM erkannt werden. Der Vorteil gegenüber der bisherigen Lösung liegt in der Möglichkeit beide Fehlerarten auch mit Einsatz von Standard-RAM erkennen zu können.

Jedoch ist zwar in dieser Konfiguration ein durch Hardware verursachter Speicherfehler identifizierbar, ein Softwarefehler könnte allerdings weiterhin unbemerkt bleiben. Beispielsweise ermöglicht dies keine Erkennung von Datenkorruption durch Lesen und Schreiben mittels fehlerhaften Zeigers, was das Ergebnis einer fehlerhaften Firmware-Programmierung sein könnte. Daher gilt es, weitere Maßnahmen zur Diversifikation der Firmware einzuführen, ohne jedoch unnötig zusätzliche Komplexität in die Firmware einzubringen.

Um derartige Datenverfälschungen identifizieren zu können, wird daher z.B. innerhalb der Steuerung die Firmware beider Prozessoren auf unterschiedliche virtuelle Adressen gelegt. Die Firmware ist hierbei weiterhin identisch, lediglich die Adresslage beim Lokatieren ist unterschiedlich. Wird nun eine zufällig ausgewählte Speicherzelle gelesen bzw. geschrieben, so führt dies zur Fehlinterpretation bzw. Verfälschung unterschiedlicher logischer Inhalte in beiden Prozessoren der Steuerung. Sobald die korrupten Daten verarbeitet werden bzw. korrupte Firmware ausgeführt wird, kann der Fehler erkannt werden.

Für dieses Problem gab es bisher keine befriedigende Lösung. Durch Einsatz bisher verfügbarer Methoden wie z.B. Schreibschutz kann keine vollkommene Sicherheit gewährleistet werden.

Nach einer weiteren Ausführungsform der Erfindung unterscheiden sich für unterschiedliche Datentypen die zugehörigen Speicherbereiche des gemeinsamen Speichers für die Instanzen.

Dies ermöglicht die Detektion einer - z.B. aufgrund eines Programmierfehlers der Firmware resultierenden - Datenkorruption durch Lesen und Schreiben über Speicherbereichsgrenzen hinaus, denn eine weitere Fehlerquelle bei der Verwendung von Zeigern ist die Adressierung über den zulässigen hierfür vorgesehenen Speicherbereich hinaus. Dabei werden Daten in der Nachbarschaft der eigentlichen Nutzdaten entweder fehlinterpretiert oder verfälscht.

Zur Identifikation dieser Fehlerart wird also vorgeschlagen, die verschiedenen Datenbereiche von Datentypen auf beiden Kernen auf verschiedenen Abstraktionsebenen unterschiedlich aufzubauen.

Dies betrifft z.B. auf der obersten Abstraktionsebene (Linkersegmente) im Einzelnen Datentypen wie z.B. initialisierte globale Daten (z.B..data), uninitialisierte globale Daten (z.B..bss), konstante Daten (z.B..rodata), lokale Daten (Stackbereiche) und Programmdaten (z.B..text).

Beispielsweise kann ausgehend von einer bestimmten Zuordnung von Daten zu bestimmten Speicherbereichen für eine der Firmware-Instanzen das Umsortieren auf die Speicherbereiche erfolgen z.B. durch Veränderung der Reihenfolge der einzelnen Linkersegmente, in tieferen Abstraktionsebenen z.B. Veränderung der Variablen- und Funktionsreihenfolgen in den Linkersegmenten bzw. Stacks, Einführung von unterschiedlich initialisierten Dummy-Variablen und -Funktionen verschiedener Länge in den Linkersegmenten bzw. Stacks oder unterschiedliche Initialisierung von uninitialiserten Daten und leerem Speicher.

Zusätzlich ist vorzugsweise bei der Verwaltung von Speicherressourcen die Initialisierung auf den unterschiedlichen Prozessoren so abzuwandeln, dass bei paralleler Anforderung von Ressourcen Bereiche unterschiedlicher Nachbarschaftsverhältnisse belegt werden.

Auch hier wird ein Problem gelöst, für das es bislang keine befriedigende technische Lösung gibt. Es ist zwar möglich, durch Prozessormechanismen (Paging) die Nachbarschaft von Daten abzusichern. Dies ist jedoch so grobgranular, dass es in der Praxis für einzelne Datenstrukturen nicht anwendbar ist. Zusammenfassend ist festzuhalten, dass es mit den beschriebenen Verfahren zur Speicherabsicherung möglich ist, die beschriebenen Arten von Speicherfehlern auch dort zu erkennen, wo die bisherigen Verfahren scheitern, oder aus Kostengründen nicht angewendet werden können. Auch Systeme, die das Verfahren in der Produktversion nicht einsetzen, können davon profitieren, indem es während der Systemtestphase temporär verwendet wird, um die oben aufgeführten Arten von Programmierfehlern aufzudecken.

In einem weiteren Aspekt der Erfindung wird zumindest eine weitere identische Instanz des Echtzeit-Betriebssystems auf einem zweiten Prozessor ausgeführt, wobei im Fall der Fehlererkennung das Vorliegen des Fehlers dem zweiten Prozessor mitgeteilt wird.

Dies entspricht z.B. einer Verwendung des obig beschriebenen Verfahrens für eine hochverfügbare Steuerung (H-System). Eine hochverfügbare Steuerung (H-System) besteht aus zwei Steuerungsbaugruppen (H-CPU), die durch spezielle Kommunikationsmodule miteinander verbunden sind. Ziel ist es, bei Ausfall oder Fehlfunktion einer der H-CPUs das in diesem H-System laufende Anwenderprogramm auf der verbleibenden H-CPU stoßfrei weiterführen zu können.

Zu diesem Zweck wird das Anwenderprogramm, wie aus dem Stand der Technik bekannt, in beiden H-CPUs parallel zum Ablauf gebracht. Hierbei muss z.B. die Firmware ein- und ausgehende Daten (z.B. Peripheriedaten, Kommunikationsdaten) bei einseitiger Anbindung im H-System auf beide H-CPUs verteilen, bei doppelter (redundanter) Anbindung die Daten geeignet abgleichen.

Die Firmware beider H-CPUs überwacht hierbei die Abarbeitung. Bei Ausfall einer H-CPU führt die verbliebene H-CPU das Anwenderprogramm fort. Bei Diskrepanzen im Ablauf (Redundanzverlust) hat die Firmware sicherzustellen, dass diejenige H-CPU aus dem H-System genommen wird, welche die Diskrepanzen durch fehlerhafte Bearbeitung erzeugt hat. Die Zuordnung eines Fehlverhaltens zum Verursacher ist nicht trivial. Im Falle der Firmware der H-CPU wird sie insbesondere durch deren hohe Komplexität erschwert.

Das vorgeschlagene Konzept der Speicherabsicherung ist für die Verwendung im H-System vorteilhaft, da es eine sichere Identifikation einer fehlerhaften H-CPU ermöglicht. Sobald eine der H-CPU's einen Fehler bei der Ausführung seines Echtzeit-Betriebssystems bemerkt, wird dies der anderen H-CPU mitgeteilt, welche dann vollständig die Aufgaben der Steuerung übernehmen kann. Anstatt also lediglich eine Diskrepanz zwischen der Arbeit der beiden H-CPU's festzustellen, ohne zu wissen, welche CPU nun die Fehlerhafte ist, wird im vorliegenden Fall die Fehlerhafte CPU als solche erkannt und z.B. vom Betrieb des zugeordneten Automatisierungssystems abgekoppelt.

Nach einer Ausführungsform der Erfindung erfolgt das Mitteilen des Fehlers durch Senden eines Signals an den zweiten Prozessor oder durch Deaktivierung einer Kommunikationsverbindung mit dem zweiten Prozessor.

In einem weiteren Aspekt betrifft die Erfindung ein Computerprogrammprodukt mit von einem Prozessor ausführbaren Instruktionen zur Durchführung der Verfahrensschritte gemäß den vorigen Ansprüchen.

In einem weiteren Aspekt betrifft die Erfindung eine Vorrichtung zur Fehlererkennung bei der Ausführung eines Echtzeit-Betriebssystems, wobei die Vorrichtung einen ersten Prozessor mit zumindest zwei Prozessor-Kernen aufweist, wobei die Vorrichtung zur parallelen Ausführung identischer Instanzen des Echtzeit-Betriebssystems auf den Prozessor-Kernen in einer gemeinsamen Virtualisierungsumgebung ausgebildet ist, wobei die Vorrichtung ferner ein Hypervisor aufweist, wobei der Hypervisor zur Überwachung der parallelen Ausführung der Instanzen ausgebildet ist, wobei der Hypervisor ferner dazu ausgebildet ist, bei Durchführung eines durch die Instanzen ausgelösten Hardwarezugriffs die beim Hardwarezugriff für jede Instanz übertragenen Daten durch den Hypervisor miteinander zu verglichen, wobei der Hypervisor dazu ausgebildet ist, im Falle einer Abweichung der übertragenen Daten oder im Falle eines einseitigen durch eine der Instanzen ausgelösten Hardwarezugriffs einen Fehler zu erkennen.

Im Folgenden werden bevorzugte Ausführungsformen der Erfindung anhand der Zeichnungen näher erläutert. Es zeigen:
- FIG 1: ein Blockdiagramm einer Vorrichtung zur Fehlererkennung bei der Ausführung eines Echtzeit-Betriebssystems,
- FIG 2: verschiedene Möglichkeiten des Speicherlayouts,
- FIG 3: ein Blockdiagramm einer Vorrichtung zur Fehlererkennung bei der Ausführung eines Echtzeit-Betriebssystems unter Verwendung einer Hypercall-Schnittstelle,
- FIG 4: eine Möglichkeit, wie sich für unterschiedliche Datentypen die zugehörigen Speicherbereiche des gemeinsamen Speichers für Instanzen unterscheiden können,
- FIG 5: ein Blockdiagramm eines H-Systems.

Im Folgenden werden einander ähnliche Elemente mit den gleichen Bezugszeichen gekennzeichnet.

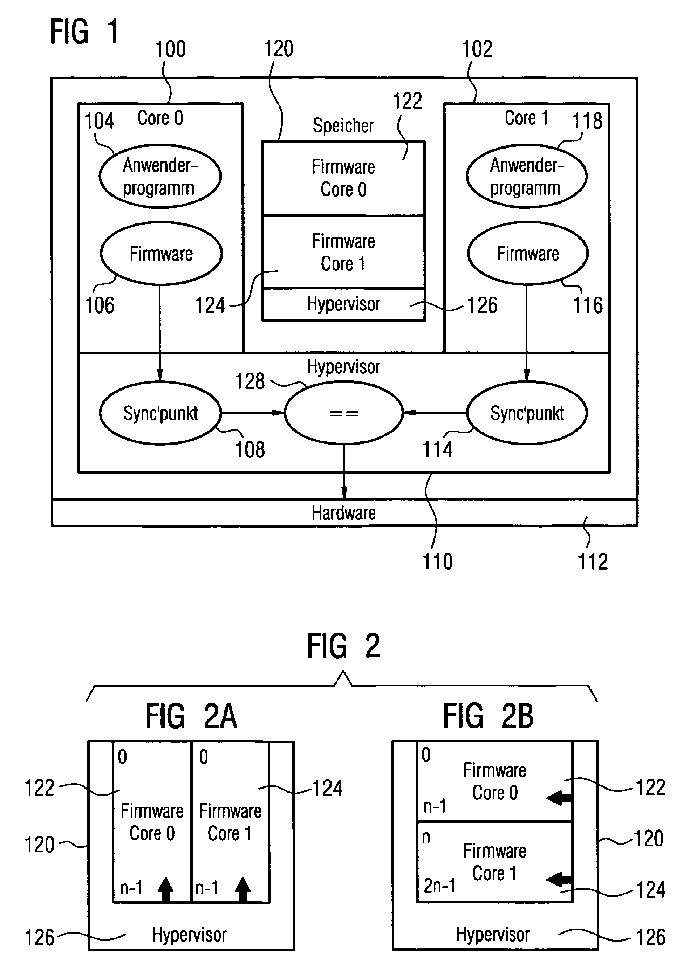

Die FIG 1 zeigt ein Blockdiagramm einer Vorrichtung zur Fehlererkennung bei der Ausführung eines Echtzeitbetriebssystems. Hierbei kommt, wie obig beschrieben, ein Prozessor zur Anwendung, welcher zwei Kerne (core 0 und core 1), mit dem Bezugszeichen 100 und 102 gekennzeichnet, aufweist. Auf jedem der Kerne wird eine Instanz eines Echtzeitbetriebssystems ausgeführt, wobei in FIG 1 das Echtzeitbetriebssystem als "Firmware" bezeichnet ist. Die Firmware 106 des Kerns 100 ist mit der Firmware 116 des Kerns 102 logisch identisch und wird in einer gemeinsamen Virtualisierungsumgebung parallel ausgeführt. Es sei angemerkt, dass die Firmware Instanzen nur "logisch" identisch sind, sich durch die obig beschriebenen Maßnahmen zur Diversifizierung jedoch durchaus physikalisch voneinander unterscheiden können. In diesem Fall sind die Firmware Instanzen bis auf diese zur Diversifizierung verwendeten Maßnahmen (z.B. unterschiedliche verwendete virtuelle Adressräume) identisch. Ein Hypervisor 110 überwacht dabei die parallele Ausführung der Firmware-Instanzen 106 und 116. Im Falle eines Hardwarezugriffs bei Hardwarevirtualisierung erfolgt ein Zugriff der jeweiligen Firmwares 106 und 116 auf die gemeinsame Hardware 112, wobei der Hypervisor 110 diese Hardwarezugriffe abfangen kann. Dieses Abfangen der Hardwarezugriffe wird in FIG 1 mit den Bezugszeichen 108 und 114 unter dem Begriff "Synchronisationspunkt" bezeichnet.

Es sei hier ferner angemerkt, dass ein Synchronisationspunkt zur früheren Fehlererkennung auch unabhängig von Hardware-Zugriffen in der Firmware gesetzt werden kann.

Bei Durchführung eines durch die Firmwares 106 oder 116 ausgelösten Zugriffs auf die Hardware 112 werden die beim Hardwarezugriff übertragenen Daten durch den Hypervisor 110 miteinander verglichen (Bezugszeichen 128).

Da die beiden Firmwares 106 und 116 logisch identisch sind und parallel zueinander arbeiten, resultiert im Falle eines einseitigen, durch einen der Firmwares 106 oder 116 ausgelösten Zugriffs auf die Hardware 112 die Entscheidung, dass ein Fehler bei der Ausführung der Firmware 106 oder 116 vorliegen muss. Ebenso ist der Hypervisor 110 in der Lage, einen Fehler als solchen dann zu erkennen, wenn im Falle eines parallelen Hardwarezugriffs der Firmwares 106 und 116 die dabei übertragenen Daten voneinander abweichen.

Die beiden Firmwares 106 und 116 bilden jeweils ein identisches Echtzeitbetriebssystem zur Ausführung von entsprechenden Anwendungsprogrammen 104 und 118, welche zum Zwecke der Fehlererkennung ebenfalls identisch sein müssen.

Der obig beschriebene Hardwarezugriff umfasst einen Zugriff auf den Speicher 120, wobei bei der Durchführung eines durch die Firmwares 106 und 116 ausgelösten Speicherzugriffs die beiden Firmwares auf den gemeinsamen Speicher 120 zugreifen. Ein Teil des Speichers 120 ist dabei mit Bereich 122 der Firmware 106 zugeordnet, und ein anderer Teil des Speichers ist mit Bereich 124 der Firmware 116 zugeordnet. Ein weiterer Speicherbereich 126 ist für den Hypervisor 110 reserviert.

Die FIG 2 zeigt nun verschiedene Möglichkeiten des Speicherlayouts. In der FIG 2a ist ein Speicherlayout gezeigt, bei dem die Instanzen der Firmwares 106 und 116 jeweils über denselben virtuellen Adressraum verfügen. Dieser virtuelle Adressraum ist jedoch verschiedenen physikalischen Adressräumen im Speicher 120 zugeordnet. Dies betrifft somit den Fall, bei dem absolut identische Versionen der Firmwares 106 und 116 zum Ablauf kommen.

In der FIG 2b hingegen ist die Möglichkeit der Zuweisung verschiedener virtueller Adressräume gezeigt, wobei in diesem Fall die beiden Firmwareinstanzen 106 und 116 unterschiedlich lokatiert werden. Wie bereits oben im Detail diskutiert, ermöglicht dies die Erkennung von Datenkorruption durch Lesen und Schreiben mittels fehlerhaften Zeigers.

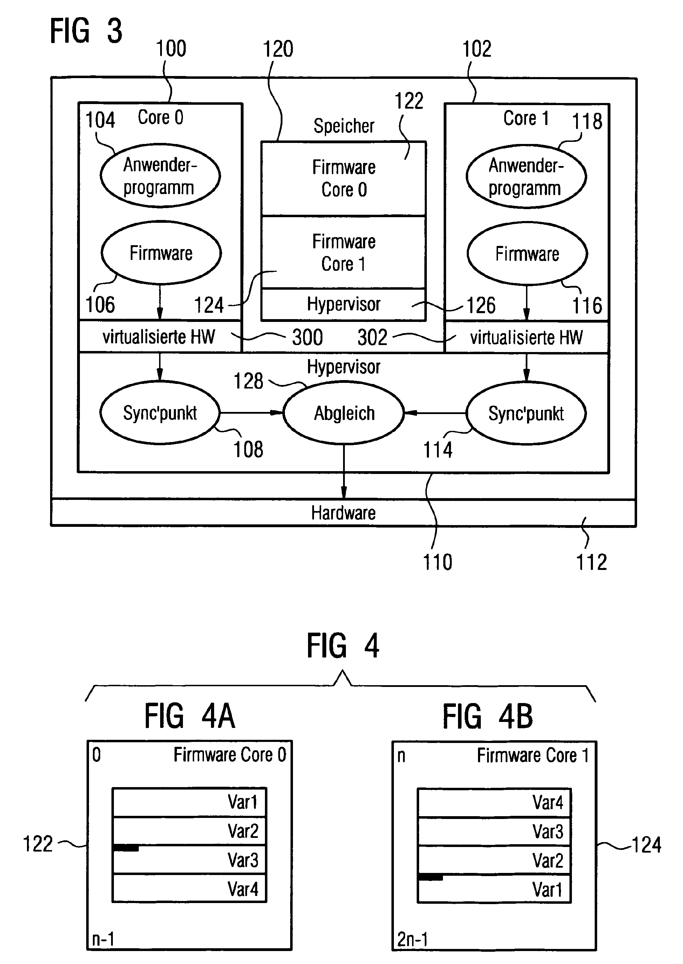

Die FIG 3 zeigt ein Blockdiagramm einer Vorrichtung zur Fehlerkennung bei der Ausführung eines Echtzeitbetriebssystems. Im Unterschied zur FIG 1 erfolgt in der FIG 3 ein Hardwarezugriff mit Paravirtualisierung, was wie obig beschrieben bedeutet, dass entsprechende Hardwaretreiber in den Hypervisor 110 verlagert werden. Die mit den Bezugszeichen 300 und 302 bezeichnete "Hypercall Schnittstelle" stellt eine Softwareschnittstelle dar, welche es ermöglicht, den Aufbau des Hypervisors 110 zu vereinfachen und die Firmwareinstanzen 106 und 116 mit erhöhter Leistung auszuführen.

Die FIG 4 zeigt eine Möglichkeit, wie sich für unterschiedliche Datentypen die zugehörigen Speicherbereiche des gemeinsamen Speichers für verschiedene Instanzen unterscheiden können.

Wie bereits oben erwähnt, ist eine Fehlerquelle bei der Verwendung von Zeigern die Adressierung über den zulässigen Bereich hinaus. Dabei werden Daten in der Nachbarschaft der eigentlichen Nutzdaten entweder fehlinterpretiert oder verfälscht. Wenn beispielsweise die verwendete Firmware fehlerhaft programmiert ist, sodass anstatt einer exakten Adressierung von Speicherbereich Var2 eine tatsächliche Adressierung über den zulässigen Bereich von Var2 hinaus erfolgt, so resultiert dies in dem Schreiben und Lesen von Daten aus dem Bereich von Var3 (vgl. FIG 4a) bezüglich der Firmwareinstanz 106.

Wird nun jedoch für die unterschiedlichen Datentypen Var1, Var2, Var3 und Var4 für die Firmwareinstanzen 106 und 116 eine Umsortierung der verschiedenen Datenbereiche vorgenommen, so kann eine solche Fehlerquelle aufgrund unterschiedlicher resultierender übertragener Daten bei einem entsprechenden Speicherzugriff aufgedeckt werden.

Wird beispielsweise, wie in FIG 4a gezeigt, bei der Verwendung von Zeigern eine Adressierung über Var2 hinaus vorgenommen, so resultiert dies bezüglich der Firmware 106 in Daten aus dem Bereich Var3, wohingegen die Firmware 116 stattdessen Daten aus dem Bereich Var1 liefert. Da diese gelieferten Daten im Normalfall nicht identisch sein werden, ist der Hypervisor damit in der Lage, die besagte Datenkorruption aufgrund von Lesen und Schreiben über Bereichsgrenzen hinaus zu detektieren und entsprechend einen Fehler bei der Ausführung der Firmwares 106 und 116 zu identifizieren.

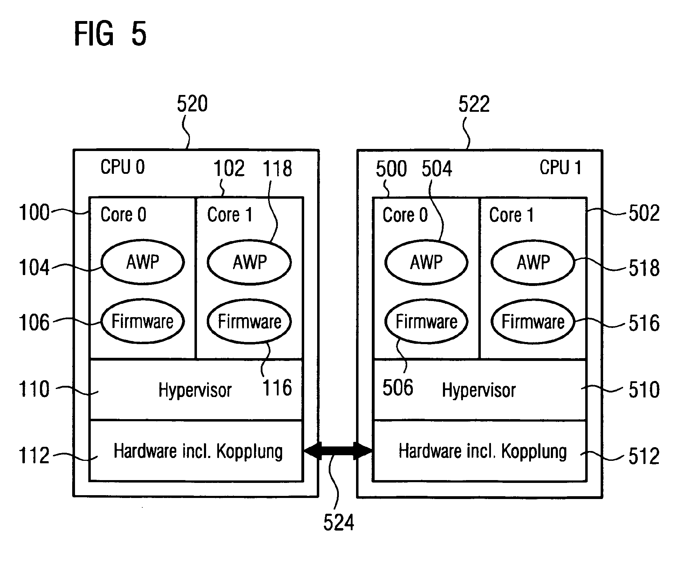

Die FIG 5 zeigt ein Blockdiagramm eines H-Systems. Das H-System besteht dabei aus zwei Steuerungsbaugruppen, nämlich den CPUs 520 und 522, die durch entsprechende Kommunikationsmodule miteinander verbunden sind. Die Kommunikationsmodule können dabei Teil der Hardware 112 der CPU 520 und der Hardware 512 der CPU 522 sein.

Die CPU 520 weist wiederum die Vorrichtung zur Fehlererkennung gemäß FIG 1 auf, also die Kombination der Kerne 100 und 102 mit den jeweiligen Firmwares 106 und 116 und dem Hypervisor 110.

In ähnlicher Weise weist die CPU 522 zwei Kerne 500 und 502 auf, auf welcher ebenfalls logisch identische Firmwares 506 und 516 ablaufen. Die beiden Firmwares 506 und 516 sind dabei mit den Firmwares 106 und 116 logisch identisch. Ebenfalls vorgesehen ist bezüglich der CPU 522 ein Hypervisor 510, welcher die parallele Ausführung der Instanzen der Firmwares 506 und 516 überwacht.

Damit wird zumindest eine weitere identische Instanz der Firmwares 106 und 116 auf dem Prozessor 522 ausgeführt. Im Falle der Fehlererkennung, d.h. des Vorliegens eines Fehlers bezüglich der Ausführung der Firmwares 106 oder 116, teilt die Hardware 112 dies der CPU 522 mit, welche daraufhin unabhängig vom Zustand der CPU 520 ihre Aufgaben alleine fortführt. Die Kommunikation zwischen den Hardwares 112 und 512 erfolgt dabei über die in FIG 5 skizzierte Kommunikationsverbindung 524.

Alternativ ist es auch möglich, dass im Falle einer Fehlererkennung die CPU 520 den Betrieb vollständig einstellt oder aber die Kommunikationsverbindung 524 mit der Hardware 520 unterbricht. Die CPU 522 kann dabei so konfiguriert sein, dass bei Unterbrechung der Kommunikationsverbindung 524 der Betrieb der CPU 522 alleine fortgesetzt wird.

Im Folgenden sei auf verschiedene Szenarien der Fehlererkennung im H-System der FIG 5 eingegangen. Im Falle der Feststellung einer Datenkorruption in einer der H-CPU's gemäß dem obig beschriebenen Verfahren ist die verursachende H-CPU eindeutig identifiziert. Sie muss daraufhin aus dem H-System genommen werden.

Z.B. tritt dieser Fall ein bei Hardwarefehlern durch Bitkipper im Speicher einer H-CPU und Softwarefehlern in Firmwareteilen, die nur auf einer H-CPU des H-Systems ablaufen. Er kann eintreten bei Softwarefehlern in synchron laufenden Firmwareteilen, die durch die beschriebenen Firmwaremodifikationen unterschiedliche Auswirkungen haben.

Eine weitere Möglichkeit ist die Feststellung einer Datenkorruption in beiden H-CPUs, denn die oben beschriebenen Maßnahmen zur Erkennung von Datenkorruption können dazu führen, dass parallel ausgeführter fehlerhafter Code auf beiden H-CPUs eines H-Systems erkannt wird. Dieser Fall führt zum Versagen des H-Systems und ist unbedingt zu vermeiden, was, wie bisher schon, durch Anwendung qualitätssichernder Maßnahmen sicherzustellen ist. Ein Vorteil zur derzeitigen Fehlerreaktion ist dabei, dass der verursachende Fehler frühzeitig erkannt werden kann, was speziell die Analyse von Fehlern in der Testphase erleichtert.

Um die Wahrscheinlichkeit eines Fehlverhaltens des H-Systems zu minimieren, werden die obig beschriebenen Variationen auf der Firmware für jeden der vier Prozessorkerne unterschiedlich implementiert. D.h. es wird bezüglich der Firmwares 106 und 116 die Firmware beider Kerne auf unterschiedliche virtuelle Adressen gelegt, wohingegen bezüglich der Firmwares 506 und 516 die Firmware der Kerne auf wiederum unterschiedliche virtuelle Adressen gelegt wird.

Durch die diversitären Firmwarevarianten steigt einerseits die Wahrscheinlichkeit einen Fehler aufzudecken, andererseits sinkt die Wahrscheinlichkeit eines beidseitigen Fehlers im H-System.

Ein weiteres Szenario ist die Feststellung einer Datenkorruption im H-System, wobei dieser Fall das Fehlverhalten eines H-Systems beschreibt, das von den einzelnen H-CPUs nicht erkannt wird. Er kann z.B. durch fehlerhaft programmierte Algorithmen in der Firmware verursacht werden. Hier bietet die Speicherabsicherung keinen Vorteil gegenüber dem bisherigen H-System. Auch diese Art Fehler ist durch die Anwendung qualitätssichernder Maßnahmen zu vermeiden.

Es sei angemerkt, dass eine Anwendung der beschriebenen Maßnahmen in Fehlersicheren Systemen (F-Systeme) ebenfalls möglich sein könnte.

## Patentansprüche

1. Verfahren zur Fehlererkennung bei der Ausführung eines Echtzeit-Betriebssystems, wobei logisch identische Instanzen (106; 116) des Echtzeit-Betriebssystems auf zumindest zwei Prozessor-Kernen (100; 102) eines ersten Prozessors (520) in einer gemeinsamen Virtualisierungsumgebung parallel ausgeführt werden, wobei ein Hypervisor (128) die parallele Ausführung der Instanzen (106; 116) überwacht, wobei bei Durchführung eines durch die Instanzen (106; 116) ausgelösten Hardwarezugriffs die beim Hardwarezugriff für jede Instanz (106; 116) übertragenen Daten durch den Hypervisor miteinander verglichen werden, wobei
- im Falle einer Abweichung der übertragenen Daten oder
- im Falle eines einseitigen durch eine der Instanzen ausgelösten Hardwarezugriffs
ein Fehler als durch den Hypervisor (128) erkannt gilt, wobei der Hardwarezugriff einen Speicherzugriff umfasst, wobei bei der Durchführung eines durch die Instanzen (106; 116) ausgelösten Speicherzugriffs die Instanzen auf einen gemeinsamen Speicher (120) zugreifen, wobei der Speicherzugriff unter Verwendung von unterschiedlichen virtuellen Adressräumen für beide Instanzen (106; 116) erfolgt.

2. Verfahren nach Anspruch 1, wobei den jeweiligen virtuellen Adressräumen physikalische Adressräume zugeordnet sind, wobei die virtuellen Adressräume mit den jeweiligen physikalischen Adressräumen identisch sind.

3. Verfahren nach Anspruch 1, wobei sich für unterschiedliche Datentypen die zugehörigen Speicherbereiche (122; 124) des gemeinsamen Speichers für die Instanzen (106; 116) unterscheiden.

4. Verfahren nach Anspruch 1, wobei ferner zumindest eine weitere identische Instanz (506; 516) des Echtzeit-Betriebssystems auf einem zweiten Prozessor (522) ausgeführt wird, wobei im Fall der Fehlererkennung das Vorliegen des Fehlers dem zweiten Prozessor (522) mitgeteilt wird.

5. Verfahren nach Anspruch 4, wobei das Mitteilen des Fehlers durch Senden eines Signals an den zweiten Prozessor (522) oder durch Deaktivierung einer Kommunikationsverbindung (524) mit dem zweiten Prozessor (522) erfolgt.

6. Computerprogrammprodukt mit von einem Prozessor ausführbaren Instruktionen zur Durchführung der Verfahrensschritte gemäß den vorigen Ansprüchen.

7. Vorrichtung zur Fehlererkennung bei der Ausführung eines Echtzeit-Betriebssystems, wobei die Vorrichtung einen ersten Prozessor (520) mit zumindest zwei Prozessor-Kernen (100; 102) aufweist, wobei die Vorrichtung zur parallelen Ausführung logisch identischer Instanzen (106; 116) des Echtzeit-Betriebssystems auf den Prozessor-Kernen in einer gemeinsamen Virtualisierungsumgebung ausgebildet ist, wobei die Vorrichtung ferner ein Hypervisor (110) aufweist, wobei der Hypervisor zur Überwachung der parallelen Ausführung der Instanzen (106; 116) ausgebildet ist, wobei der Hypervisor ferner dazu ausgebildet ist, bei Durchführung eines durch die Instanzen (106; 116) ausgelösten Hardwarezugriffs die beim Hardwarezugriff für jede Instanz übertragenen Daten durch den Hypervisor (110) miteinander zu vergleichen, wobei der Hypervisor (110) dazu ausgebildet ist,
- im Falle einer Abweichung der übertragenen Daten oder
- im Falle eines einseitigen durch eine der Instanzen (106; 116) ausgelösten Hardwarezugriffs
einen Fehler zu erkennen, wobei der Hardwarezugriff einen Speicherzugriff umfasst, wobei bei der Durchführung eines durch die Instanzen (106; 116) ausgelösten Speicherzugriffs die Instanzen auf einen gemeinsamen Speicher (120) zugreifen, wobei der Speicherzugriff unter Verwendung von unterschiedlichen virtuellen Adressräumen für beide Instanzen (106; 116) erfolgt.

## Claims

1. Method for error detection in the execution of a real-time operating system, wherein logically-identical instances (106; 116) of the real-time operating system are executed in parallel on at least two processor cores (100; 102) of a first processor (520) in a shared virtualization environment, wherein a hypervisor (128) supervises the parallel execution of the instances (106; 116), wherein during the execution of a hardware access initiated by the instances (106; 116), the data transmitted during the hardware access for each instance (106; 116) is compared with one another by the hypervisor, wherein
- in the event of a discrepancy between the transmitted data or
- in the event of a unilateral hardware access initiated by one of the instances
an error is deemed to be detected by the hypervisor (128), wherein the hardware access comprises a memory access, wherein during the execution of a memory access initiated by the instances (106; 116), the instances access a shared memory (120), wherein the memory is accessed using different virtual address spaces for both instances (106; 116).

2. Method according to claim 1, wherein physical address spaces are assigned to the respective virtual address spaces, wherein the virtual address spaces are identical to the respective physical address spaces.

3. Method according to claim 1, wherein for different data types the associated memory areas (122; 124) of the shared memory differ for the instances (106; 116).

4. Method according to claim 1, wherein at least one further identical instance (506; 516) of the real-time operating system is also executed on a second processor (522), wherein, in the event of an error being detected, the presence of the error is notified to the second processor (522).

5. Method according to claim 4, wherein the error is notified by sending a signal to the second processor (522) or by deactivating a communication link (524) to the second processor (522).

6. Computer program product with instructions able to be executed by a processor for carrying out the method steps in accordance with the preceding claims.

7. Device for error detection in the execution of a real-time operating system, wherein the device has a first processor (520) with at least two processor cores (100; 102), wherein the device is embodied for parallel execution of logically-identical instances (106; 116) of the real-time operating system on the processor cores in a shared virtualization environment, wherein the device also has a hypervisor (110), wherein the hypervisor is embodied for supervising the parallel execution of the instances (106; 116), wherein the hypervisor is further embodied, during execution of a hardware access initiated by the instances (106; 116), to compare the data transmitted for each instance during the hardware access by the hypervisor (110) with one another, wherein the hypervisor (110) is embodied,
- in the event of a discrepancy between the transmitted data or
- in the event of a unilateral hardware access initiated by one of the instances(106; 116),
to detect an error, wherein the hardware access comprises a memory access, wherein during the execution of a memory access initiated by the instances (106; 116), the instances access a shared memory (120), wherein the memory is accessed using different virtual address spaces for both instances (106; 116).

## Revendications

1. Procédé de détection d'erreurs lorsqu'un système fonctionnant en temps réel est exécuté, dans lequel des instances (106; 116) identiques logiquement du système fonctionnant en temps réel sont exécutées en parallèle dans un environnement commun de virtualisation sur au moins deux noyaux (100; 102) d'un premier processeur (520), un hyperviseur (128) contrôlant l'exécution en parallèle des instances (106; 116), dans lequel lorsqu'un accès matériel déclenché par les instances (106; 116) est effectué, les données transmises lors de l'accès matériel pour chaque instance (106; 116) sont comparées entre elles par l'hyperviseur, dans lequel
- dans le cas d'un écart entre les données transmises ou
- dans le cas d'un accès matériel déclenché unilatéralement par l'une des instances
une erreur est considérée comme détectée par l'hyperviseur (128), l'accès matériel comprenant un accès à une mémoire, dans lequel, lorsque l'on effectue un accès à la mémoire déclenchée par les instances (106; 116), les instances accèdent à une mémoire (120) commune, l'accès en mémoire s'effectuant en utilisant des espaces d'adresse virtuels différents pour les deux instances (106; 116).

2. Procédé suivant la revendication 1, dans lequel les espaces d'adresse physiques sont affectés aux espaces d'adresse virtuels respectifs, les espaces d'adresse virtuels étant identiques aux espaces d'adresse physiques respectifs.

3. Procédé suivant la revendication 1, dans lequel pour des types de données différents, les parties (122; 124) de mémoire associées de la mémoire commune se distinguent pour les instances (106; 116).

4. Procédé suivant la revendication 1, dans lequel en outre, au moins une autre instance (506; 516) identique du système fonctionnant en temps réel est exécutée sur un deuxième processeur (522), dans lequel dans le cas de la détection d'erreur, il est fait part de la présence de l'erreur au deuxième processeur (522).

5. Procédé suivant la revendication 4, dans lequel faire part de l'erreur s'effectue en envoyant un signal au deuxième processeur (522) ou en désactivant une liaison (524) de communication avec le deuxième processeur (522).

6. Produit de programme d'ordinateur ayant des instructions pouvant être exécutées par un processeur pour la mise en oeuvre des stades du procédé suivant les revendications précédentes.

7. Dispositif de détection d'erreurs lorsqu'un système fonctionnant en temps réel est exécuté, dans lequel le dispositif a un premier processeur (520) ayant au moins deux noyaux (100; 102) de processeur, le dispositif étant constitué pour l'exécution en parallèle d'instances (106; 116) identiques logiquement du système fonctionnant en temps réel sur les noyaux de processeur dans un environnement commun de virtualisation, le dispositif ayant, en outre, un hyperviseur (110), l'hyperviseur étant constitué pour le contrôle de l'exécution en parallèle des instances (106; 116), l'hyperviseur étant constitué, en outre, pour, lors de l'exécution d'un accès matériel déclenché par les instances (106; 116), comparer entre elles par l'hyperviseur (110) les données transmises pour chaque instance lors de l'accès matériel, dans lequel l'hyperviseur (110) est constitué pour
- dans le cas d'un écart entre les données transmises ou
- dans le cas d'un accès logiciel déclenché unilatéralement par l'une des instances (106; 116)
détecter une erreur, l'accès matériel comprenant un accès à une mémoire, dans lequel, lors de l'exécution d'un accès en mémoire déclenché par les instances (106; 116), les instances accèdent à une mémoire (120) commune, l'accès en mémoire s'effectuant en utilisant des espaces d'adresse virtuels différents pour les deux instances (106 ; 116).
